# EUROPEAN PATENT APPLICATION

(11) **EP 2 860 355 A1**
(43) Date of publication of application: **15.04.2015**
(21) Application number: 13188004.9
(22) Date of filing: 10.10.2013
(51) Int. Cl.: F01D 11/00, F16J 15/06, C08G 77/04, C08L 83/04

(54) **Gasket for use in high-temperature applications and method for manufacturing a gasket**

(71) Applicant: ALSTOM Technology Ltd, 5400 Baden (CH)
(72) Inventor: Kersten, Marko, 5400 Baden (CH)

(57) **Abstract**

It is an object of the present invention to provide a gasket for use in high-temperature applications and a method for manufacturing such a gasket, which is specifically adapted for use in high-temperature applications without requiring a repeated retightening of the mounting means of the gaskets, and which reduces or avoids a loss of pretension in particular after the first cycles of operation of such a high-temperature application, e.g. a gas turbine. The gasket and the method for manufacturing the same according to the invention are characterized in that the gasket is set to a final compression property prior to installation by means of a preheating at higher temperatures as compared to temperatures in use of the gasket. The rubber material of the gasket according to the invention is prior to the first installation modified from an initial compression property or compressibility and flexibility to a final compression property, which is given in such gaskets after a certain number of operation cycles in high-temperature applications.

## Description

### Technical Field

The present invention relates to a gasket for use in high-temperature applications, as well as a method for manufacturing such a gasket, which is specifically adapted for the sealing of pipings operated in high-temperature ranges.

### Background Art

Gaskets, which are used for the sealing of piping systems in high-temperature applications, such as the piping of a cooling system of gas turbines, are required to provide a tight sealing of these piping systems even though they are subject to increased stresses, in particular as regards the pressure and heat in such high-temperature applications during the operation of engines and turbines. Due to these operation conditions, the gaskets undergo during use changes in physical properties, which can affect the performance of the sealing effect and which might lead to leakages if the gaskets are not reviewed and maintained over time. Common gaskets used for pipings, e.g. in cooling systems of gas turbines, are essentially made on the basis of rubber compositions, including natural and/or synthetic materials and different types of fillers, whereby rubber binders are used for the realization of such gaskets. The rubber binders in the material compositions of the conventional gaskets are used to provide sealability and resilience characteristics. Depending on the type of material and binders used for the manufacturing of such gaskets, the compression property of the gaskets is determined. When such sealing gaskets are used in high-temperature applications, the physical properties and in particular the resilience and compression properties of the gasket will change after some cycles of operation. After some time of operation of as gas turbine, for example, the sealing gaskets will therefore have to be reviewed, and under some circumstances the flanges of the sealing have to be retightened in order to provide a sufficient sealing effect. This modification of physical properties, in particular with regard to the compression properties of these gaskets, is in particular in high-temperature applications critical in the first phases of operation of a gas turbine or the like. When the compressibility and resilience characteristics of the gaskets are more and more reduced, the initial mounting by means of conventional mounting flanges for gaskets will get loose, and the screw bolts of such gasket flanges have to be retightened. This is caused by the fast and excessive material modification of the gaskets made of rubber materials and additional binders, since the rubber binders will degrade in a fast manner if the gasket is mounted in such a high-temperature application piping system.

For the purpose of sealing piping systems in high-temperature applications, it has been proposed in the prior art to provide complex mounting systems of the gaskets, in which the tension of the mounting bolts is maintained even in case that the material properties of the gasket are changed due to the high temperature or high pressure in the piping system. Such complex gaskets are efficient to maintain the required fitting forces over a comparatively long lifetime. However, they are difficult to manufacture and lead to an increase in the total costs of such gaskets. If gaskets with standard fittings and fitting bolts are used in high-temperature applications, the maintenance after the first cycles of operation of a gas turbine, for example, is unavoidable. All the gaskets in such a piping have to be reviewed and retightened after a certain number of operation cycles in order to guarantee a tight sealing of the piping.

### Summary of the Invention

In view of the above-described disadvantages, it is an object of the present invention to provide a gasket for use in high-temperature applications, as well as a method for manufacturing such a gasket, which is specifically adapted for use in high-temperature applications without requiring a repeated retightening of the mounting means of the gaskets, and which reduces a loss of pretension in particular after the first cycles of operation of such a high-temperature application, e.g. a gas turbine.

This problem is solved by a gasket for high-temperature applications with the features according to claim 1, as well as by a method for manufacturing a gasket with the steps of claim 4. Further developments and advantageous embodiments of the invention are defined in the dependent claims.

The gasket according to the present invention is specifically adapted for a use in high-temperature applications, such as a piping of cooling air for a cooling system of gas turbines or the like, having as a base material a rubber composition including a binder, by means of which an initial compression property is defined, which is modified in use over the time to a final compression property after a number of operation cycles under high temperatures, and the gasket is **characterized in that** the gasket is set to said final compression property prior to installation by means of a preheating at higher temperatures as compared to temperatures in use of the piping system. The rubber material of the gasket according to the invention is prior to the first installation modified from an initial compression property or compressibility and flexibility to a final compression property, which is given in such gaskets after a certain number of operation cycles in high-temperature applications. By means of a heating of the gasket at higher temperatures as compared to the temperatures in use of the high-temperature application, the mechanical properties of the material composition of the gasket are hereby specifically adapted to the high-temperature application such that the loss of a pretension of the mounting means of the gasket is reduced in view of such conventional gaskets for sealing piping systems. The gasket according to the invention has a final compression property, which is modified from an initial compression property by means of heating the gasket prior to the first use in the piping system.

With this reduction of compressibility and resilience characteristics of the gasket before the first use in the piping, excessive seating during the first cycles of operation of a gas turbine is avoided. Therefore, the tight sealing is guaranteed, and a loss of pretension of the mounting means of the gasket is reduced. The gasket according to the invention undergoes a kind of premature aging in the sense that the usual aging due to the heat and pressure in the high-temperature application is intentionally set in the form of gasket used for the high-temperature application. With the gasket according to the present invention, the safety margins against leakage are higher as compared to conventional gaskets and in all different forms and types of operation of the high-temperature application.

According to an advantageous aspect of the gasket according to the invention, the material of the gasket is heated at high temperatures over a sufficient time so that the binder from the initial material composition of the gasket is removed at least to a pre-defined extent. Through the special treatment of the material of the gasket, a binder of the rubber composition is removed at least to a certain pre-defined extent such that the final compression property of the gasket is given for the first use of the gasket in a high-temperature application. By removing the binder, the mechanical properties of the gasket are modified such that the resilience and compressibility are reduced. The binder, which provides in conventional gaskets the function of sealability and resilience characteristics, is purposefully removed in the gaskets according to the present invention, and the sufficient sealing is achieved by means of a compression during the installation of the gasket by means of the gasket mounting devices (flanges, bolts, or the like). Any leakage of the medium in the piping system is hereby avoided since the gasket will not expose excessive seating after the first numbers of operation cycles. The gasket has already undergone a specific type of modification in view of material characteristics such that a tight and efficient sealing with rater simple means is achieved without requiring a retightening of the fastening bolts of the gasket after the first few cycles of operation of the high-temperature application.

According to a further advantageous aspect of the gasket of the present invention, the final compression property is set by a specific premature aging processing, including at least a heating at high temperatures. With this specific premature aging processing, the gasket comprises upon its first use a final defined compression property, which is such that in the use in high-temperature applications the modification and change of mechanical properties of the gasket are reduced. In particular, the gasket having the defined final compression property is less resilient and therefore less sensitive to so-called excessive seating during the first cycles of operation of a high-temperature system, such as gas turbines. By avoiding excessive seating during the first stages of use of the gasket, a preliminary leakage is avoided, and a sufficient pretension of the fitting means, such as screw bolts or the like, is maintained over a longer period of time as compared to conventional gaskets. The future influence of the increased heat in use of the gasket is so to speak anticipated, and the gasket is specially adapted and treated before it is used in the high-temperature application such that the final compression property is approached or reached. By means of the present invention, the detrimental influences of high temperatures are to a certain extent eliminated. By means of the invention, the tight sealing of the gasket is guaranteed over a longer period of time without requiring repeated maintenances and reviews of the respective gaskets used in a piping system of a cooling system for a gas turbine, for example.

The present invention relates furthermore to a method for manufacturing a gasket for use in high-temperature applications as defined in claim 4, wherein the gasket has as a base material a rubber composition including a binder, by means of which an initial compression property is defined, which is modified in use over the time to a final compression property after a certain number of operation cycles under high temperatures, and the method is characterized by preheating the gasket prior to installation at higher temperatures as compared to the temperatures in future use such that said final compression property is set. By means of a rather simple treatment of the material composition of the gasket prior to the first use, a specifically adapted compression property is set, which is appropriate for avoiding the excessive modification of the resilience and compressibility characteristics of the gasket after installation in the high-temperature application. The gasket undergoes a preheating prior to the first installation at higher temperatures as compared to the temperatures in future use such that the final defined compression property is set. With this manufacturing method according to the invention, the sealing efficiency of the gaskets in high-temperature applications is improved. The later deformation of the gasket during the use in the piping is limited since the further shrinking of the material is avoided. The specific modification of the compression property to a final compression property, which is given in conventional gaskets after a certain time of use in high-pressure applications, has furthermore the advantage that the gaskets do not have to be reviewed after the first numbers of operation cycles of the gas turbine. A tight and secure sealing with the gaskets is made possible by means of the kind of premature aging of the gasket in view of the specific requirements in high-temperature applications.

According to an advantageous aspect of the method of the invention, the gasket is heated in an oven at high temperatures over a sufficient time in order that the binder of a rubber material composition is removed from the initial material composition of the gasket at least to a pre-defined extent. By removing the binder from the material of the gasket, the elasticity properties are modified on purpose to such an extent that an excessive seating of the gasket after the first cycles of use in high temperatures is reduced or eliminated. This method according to the invention results therefore in a highly efficient gasket in view of the sealing performance in applications such as cooling air pipings of gas turbines, in which high and very high temperatures are given.

According to a further advantageous aspect of the method of the invention, the gasket is heated in an oven over a certain time at a temperature 20% higher than the maximum range of temperatures in later use of the gasket in an intended high temperature application. By means of this, the influence of temperatures on the mechanical properties of the gaskets is further reduced in the later use of the gasket in the piping system. The gaskets have always undergone a sufficient degree of preheating before they are used in a high-temperature installation. The temperature difference of 20% as compared to the maximum temperature ranges in the use of the gasket has surprisingly shown to the inventors that excellent results in the modification of the compression properties of the gaskets can be achieved.

According to a further advantageous aspect of the method of the invention, the gasket is heated prior to use at such temperatures and over such a period of time that a binder of the material composition is completely removed from the initial material composition of the gasket. By completely removing the binder, the degree of change of the mechanical characteristics of the gasket in later use is reduced to a maximum. Without the binder present in the material composition of the gasket, even the high temperatures will not lead to a large modification of in particular the compression property of the gasket in a later situation of use. The sealing efficiency is hereby further increased, and the necessary maintenance or review of the gaskets after first cycles of operations is not necessary anymore. A sufficient pretension of the gasket mounting means is maintained over a rather long term as compared to conventional gaskets in such high-temperature applications.

## Claims

1. Gasket for use in high temperature applications such as a piping of cooling air for a cooling system of gas turbines having as base material and including a binder by means of which an initial compression property is defined which is modified in use over the time to a final compression property after a number of operation cycles under high temperatures, **characterized in that** the gasket is set to said final compression property prior to installation by means of a preheating at higher temperatures as compared to temperatures in use.

2. Gasket according to claim 1, **characterized in that** the material of the gasket is heated at high temperatures over a sufficient time in order that said binder from an initial material composition of the gasket is removed at least to a predefined extent.

3. Gasket according to claim 1 or 2, **characterized in that** said final compression property is set by a specific premature ageing processing including at least a heating at high temperatures.

4. Method for manufacturing a gasket for use in high temperature applications such as a piping of cooling air for a cooling system of gas turbines having as base material a rubber composition including a binder by means of which an initial compression property is defined which is modified in use over the time to a final compression property after a number of operation cycles under high temperatures, **characterized by** preheating the gasket prior to installation at higher temperatures as compared to temperatures in use such that said final compression property is set.

5. Method according to claim 4, **characterized by** heating the gasket in an oven at high temperatures over a sufficient time in order that said binder from an initial material composition of the gasket is removed at least to a predefined extent.

6. Method according to claim 4 or 5, **characterized by** heating the gasket in an oven over a certain time at a temperature 20% higher than a maximum range of temperatures in use of the gasket in an intended high temperature application.

7. Method according to any one of the preceding claims 4 to 6, **characterized by** heating the gasket prior to use at such temperatures and over such a period of time that said binder is completely removed from an initial material composition of the gasket.
